# EUROPÄISCHE PATENTSCHRIFT

(11) **EP 0 739 680 B1**
(45) Veröffentlichungstag und Bekanntmachung des Hinweises auf die Patenterteilung: **07.07.1999**
(21) Anmeldenummer: 96106052.2
(22) Anmeldetag: 18.04.1996
(51) Int. Cl.: B23Q 1/36

(54) **Vorrichtung zum Einrichten eines Oberteils relativ zu einem Unterteil**
Device for adjusting an upper part relative to a lower part
Dispositif pour le réglage d'une partie supérieure par rapport à une partie inférieure

(30) Priorität: 26.04.1995 DE 19514851
(43) Veröffentlichungstag der Anmeldung: 30.10.1996
(73) Patentinhaber: System 3 R International AB, 162 26 Vällingby (SE)
(72) Erfinder: Pettersson, Björn, A-175 e2 Järfälla (SE)
(74) Vertreter: Zinngrebe, Horst, Dr.rer.nat.

(56) Entgegenhaltungen:
- GB-A- 780 871
- GB-A- 2 194 074
- US-A- 4 944 626

## Beschreibung

Die Erfindung betrifft eine Vorrichtung zum Einrichten eines Oberteils, welches zur Befestigung eines Werkstücks oder Werkzeugs vorgesehen ist, bezüglich eines mit dem Oberteil verbundenen Unterteils, mit wenigstens einer Stellschraube, deren Schaft sich durch das Oberteil drehbar erstreckt und in ein im Unterteil vorgesehenes Gewindes eingreift.

Im Präzisionsmaschinenbau kann eine derartige Nivelliervorrichtung für ein gelegentlich auch Pendelkopf bezeichnetes Gerät benutzt werden, mit welcher ein am Oberteil befestigtes Werkstück oder Werkzeug bezüglich eines maschinenfesten Koordinatensystems aus wenigstens zwei zueinander senkrechten Achsen in eine exakte Sollposition eingerichtet weden kann. Derartige Vorrichtungen sind jedoch in der Bedienung umständlich und in der Herstellung aufwendig.

In dem Dokument US-A-4,944,626 ist eine Vorrichtung mit Unterteil und Oberteil beschrieben, bei welcher der Schaft einer Stellschraube sich drehbar durch das Unterteil erstreckt und in ein im Oberteil vorgesehenes Gewinde eingreift. Die Stellschraube hat die Aufgabe, Unterteil und Oberteil voneinander wegzudrücken.

Der Erfindung liegt demgegenüber die Aufgabe zugrunde, die eingangs genannte Vorrichtung derart auszugestalten, daß sie ohne Genauigkeitsverlust einfacher hergestellt werden kann.

Dazu ist erfindungsgemäß vorgesehen, daß das Oberteil an dem Unterteil unter vorgegebener Vorspannung relativ zum Unterteil mit Abstand zur Stellschraube verankert ist und daß ein Führungsteil am Unterteil und am Oberteil befestigt ist, welches dem Oberteil bei Verstellen der Stellschraube eine Kippbewegung um eine zur Stellschraube senkrechte Achse aufzwingt. Damit kann eine Einstellgenauigkeit des Oberteils relativ zu dem gewöhnlich maschinenfestem Unterteil in der Größenordnung von 1 µ durch Drehen an der Stellschraube um eine Umdrehung oder weniger erreicht werden. Außerdem kann die Herstellung der erfindungsgemäßen Vorrichtung gegenüber bekannten Vorrichtungen dieser Art vereinfacht werden. Ferner erfolgt die Einstellbewegung des Oberteils definiert um die genannte Achse, die üblicherweise mit den Maschinenachsen in vorgegebener Beziehung steht.

Bevorzugte Ausgestaltungen der Erfindung sind in den Unteransprüchen angegeben. Danach ist beispielsweise zur Erzeugung der Vorspannung zweckmäßig vorgesehen, daß das Oberteil auf dem Unterteil mittels eines Bolzens dauerhaft verankert ist, an welchem wenigstens eine zwischen Unterteil und Oberteil eingespannte Feder angeordnet ist. Die Feder kann zweckmäßig aus einem oder mehreren Tellerfederpaketen bestehen, wobei im letzteren Fall die einzelnen Federpakete gegeneinander verspannt sein können. Ferner empfiehlt es sich, ein am Unterteil und am Oberteil befestigtes Führungsteil vorzusehen, welches dem Oberteil beim Verstellen der Stellschraube eine Bewegung um eine zur Verbindungslinie von Stellschraube und Bolzen senkrechte Achse aufzwingt. In zweckmäßiger Ausgestaltung ist das Führungsteil als eine zwischen Oberteil und Unterteil zwischengelegte Federstahlplatte ausgebildet, welche an wenigstens einem ersten Abschnitt am Unterteil und an wenigstens einem zweiten Abschnitt am Oberteil befestigt ist. Die Federstahlplatte besitzt zweckmäßigerweise im wesentlichen Kreuzform, an deren gegenüberliegenden Enden zwei er ste Abschnitte beziehungsweise zwei zweite Abschnitte ausgebildet sind. Der Bolzen kann dann mit Vorteil in der Nähe des ersten Abschnittes der Federstahlplatte und die Stellschraube in der Nähe eines weiteren beabsteandeten ersten Abschnittes angeordnet sein.

In besonders bevorzugter Weiterführung des Erfindungsgedankens sind zur Einrichtung des Oberteils relativ zu zwei in einer Ebene liegenden senkrechten Achsen zwei Paare umfassend je eine Stellschraube und je einen Bolzen vorgesehen, wobei jeweils ein Paar aus Stellschraube und Bolzen symmetrisch zu einer der Achsen auf der anderen Achse angeordnet ist. Damit gelingt eine Einrichtung des Oberteils relativ zu der durch die x-Achse und die y-Achse aufgespannten Ebene durch einfache Drehung an den beiden Stellschrauben. Für das einzurichtende Werkzeug oder Werkstück kann das Oberteil einen über das Unterteil nach einer Seite vorstehenen Ansatz aufweisen, der Bohrung oder dergleichen Mittel zur Befestigung eines Werkstücks oder Werkzeugs besitzt. Es ist dann besonders zweckmäßig, wenn einer der Bolzen dem Ansatz benachbart ist. Ferner kann das Unterteil an seiner Unterseite mit einer insbesondere schwalbenschwanzartigen Präzisionsführung versehen sein, die eine Klemmvorrichtung zum Festlegen des Unterteils auf einer Schwalbenschwanz-Maschinenführung besitzen kann.

Die Erfindung eignet sich besonders zur Einrichtung eines am Oberteil entweder direkt oder gegebenenfalls über weitere Hilfsmittel wie etwa einen Schraubstock befestigten Werkzeugs, das anschließend nach einem vorgegebenen Muster drahterosiv bearbeitet werden soll.

Die Erfindung wird nachstehend anhand des in der beigefügten Zeichnung dargestellten Ausführungsbeispiels im einzelnen beschrieben. Es zeigen:
- Fig. 1: eine Draufsicht auf das Oberteil einer mit dem Merkmal der Erfindung ausgerüsteten Nivelliervorrichtung;
- Fig. 2: die Ansicht eines Schnittes längs der Linie A-A aus Figur 1;
- Fig. 3: die Ansicht eines Schnittes längs der Linie B-B aus Figur 1;
- Fig. 4: die Ansicht eines Schnittes längs der Linie C-C aus Figur 1.

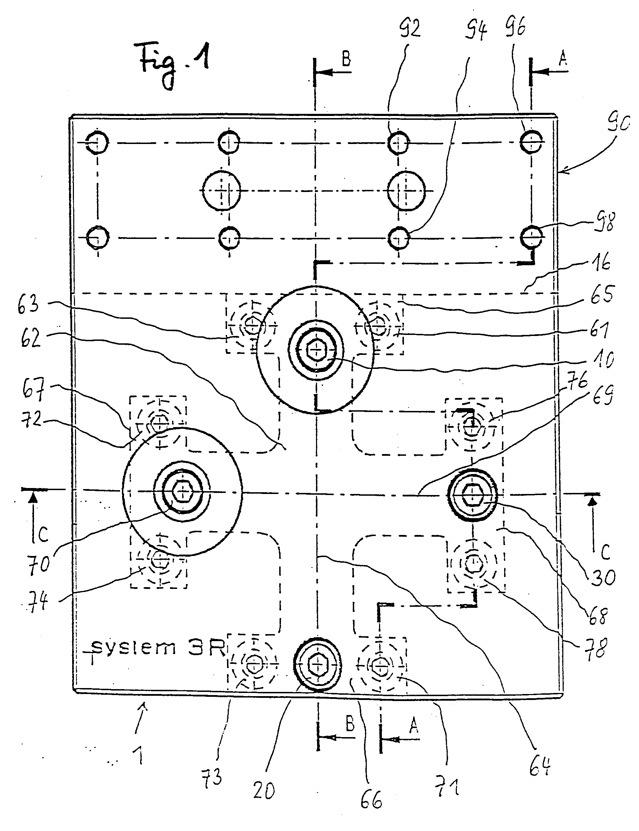

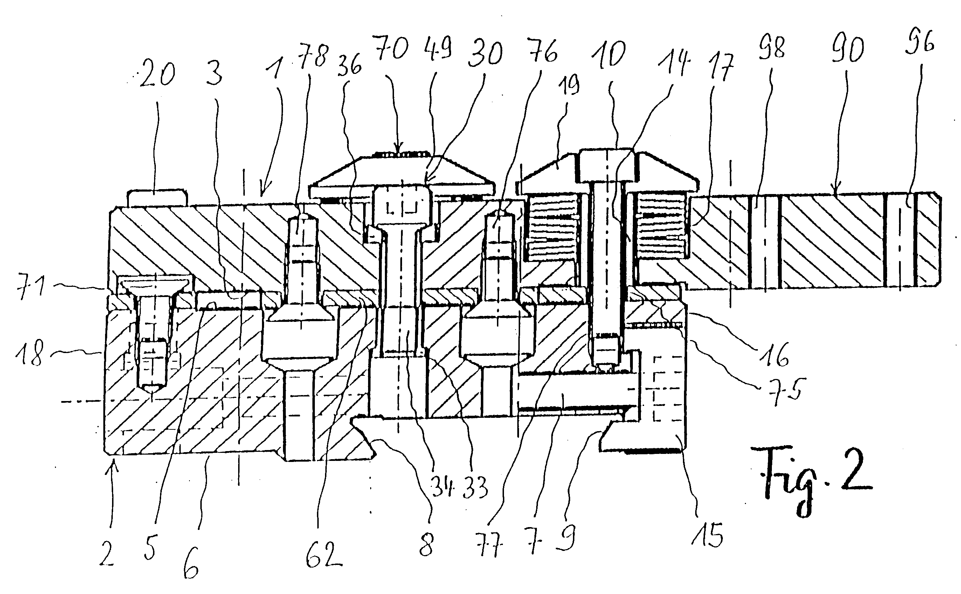

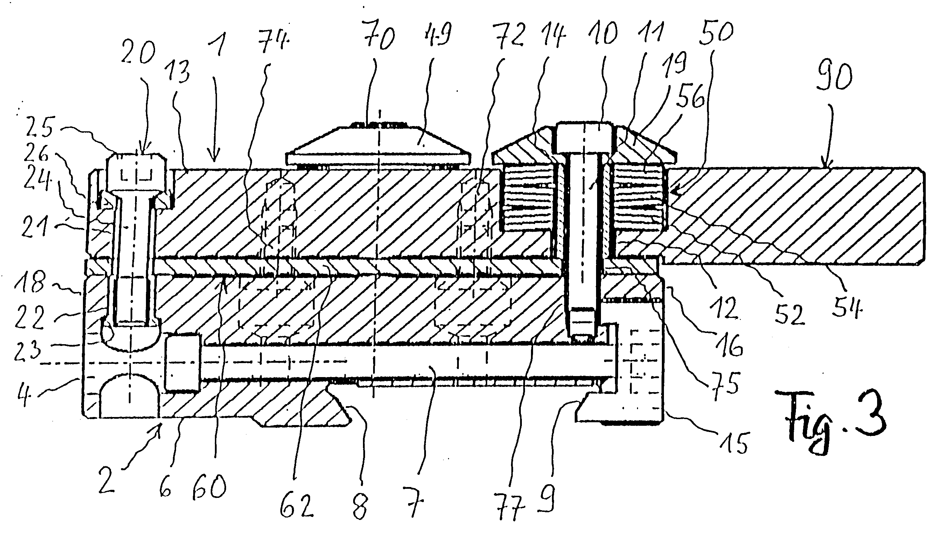

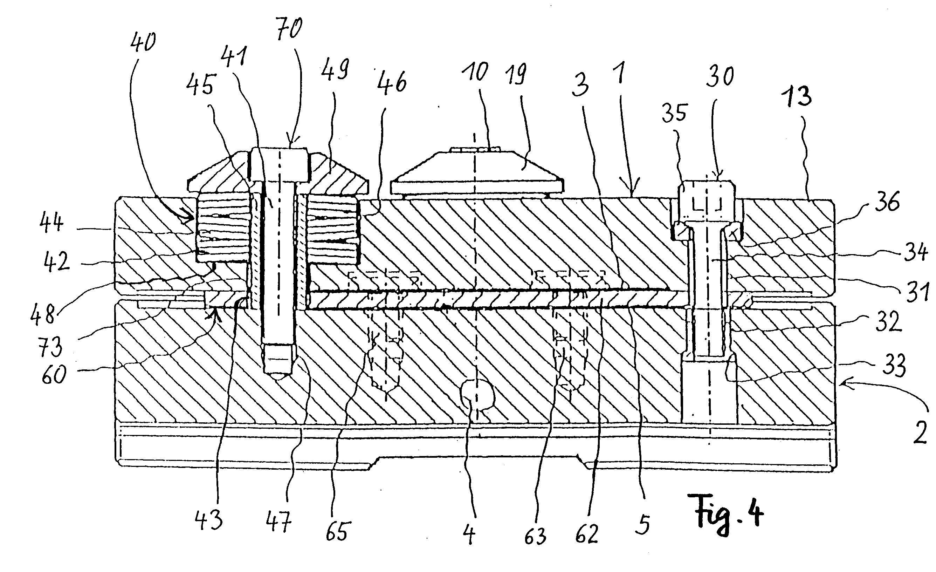

Gemäß Figuren 2 und 3 besteht das Unterteil 2 der erfindungsgemäßen Nivelliervorrichtung aus einem massiven im wesentlichen rechtwinkligen Werkzeugstahl-Block, in dessen im wesentlichen planen Unterseite 6 parallel zu einer Seitenfläche 16 ein Schwalbenschwanz-Profil mit einer geneigten Schwalbenschwanzfläche 8 eingearbeitet ist. Längs der Seitenfläche 16 ist in einer Ausnehmung des Unterteils 1 ein Klemmstück 15 mittels eines Klemmbolzens 7 lösbar gehalten, dessen Schaft sich durch eine der Unterseite 6 nahe und zur Seitenfläche 16 senkrechte Durchgangsbohrung 4 im Unterteil 2 erstreckt und in ein Innengewinde in dem Klemmstück 15 eingreift. Das Klemmstück 15 besitzt gegenüber der Schwalbenschwanzfläche 8 des Unterteils 2 eine entsprechend gegensinnig geneigte weitere Schwalbenschwanzfläche 9. Der im Unterteil 2 versenkte Kopf des Klemmbolzens 7 ist über einen Kanal von außen zugänglich, so daß das Unterteil 2 auf ein etwa an einer Erodiermaschine vorgesehenes Schwalbenschwanzgegenprofil durch Heranziehen des Klemmstückes 15 gegen das Unterteil 2 mittels des Klemmbolzens 7 in eindeutiger Position aufgeklemmt werden kann.

Auf die im wesentlichen plane Oberfläche 5 des Unterteils 2 ist ein als im ganzen mit 60 bezeichnetes Führungsteil in Form einer nur wenige Millimeter starken Federstahlplatte 62 aufgeschraubt, deren kreuzförmiger Umriß in die Draufsicht gemäß Figur 1 gestrichelt eingezeichnet ist. Die Federstahlplatte 62 weist zwei erste Abschnitte 65, 66 auf, die einander gegenüberliegend an je einem Ende der Kreuzform als Verbreiterungen derselben ausgeführt sind. Der erste Abschnitt 65 befindet sich in der Nähe der Seitenfläche 16 (in Fig. 1 gestrichelt eingezeichnet) des Unterteils 2 und ist über zwei beabstandete Schrauben 61, 63 auf der Oberfläche 5 des Unterteils 2 festgelegt` Der gegenüberliegende erste Abschnitt 66 befindet sich in der Nähe der der Seitenfläche 16 gegenüberliegenden Seitenfläche 18 des Unterteils 2 und ist mit zwei beabstandeten Schrauben 71, 73 auf der Oberfläche 5 festgelegt.

Das Oberteil 1 der erfindungsgemäßen Nivelliervorrichtung hat in Draufsicht (Figur 1) bis auf einen noch zu erläuternden Ansatz 90 die gleichen Abmessungen wie das Unterteil 2 und ist mit letzterem über die Federstahlplatte 62 verbunden. Dazu weist die Federstahlplatte 62 zwei gegenüberliegende zweite. Abschnitte 67, 68 auf, die seitlich verbreiterte Enden des anderen Querbalkens der Kreuzform der Federstahlplatte 62 sind. Ein zweiter Abschnitt 67 ist mit Schrauben 72, 74 und der gegenüberliegende zweite Abschnitt 68 ist mit Schrauben 76, 78 an der im wesentlichen planen, dem Unterteil 2 benachbarten Unterfläche 3 des Oberteils 1 befestigt.

Am Abschnitt 65 weist die Federstahlplatte 62 eine Durchbohrung 75 auf, durch die sich ein Bolzen 10 erstreckt. Der Bolzen 10 greift in ein Gewindesackloch 77 im Unterteil 2 ein. Das Oberteil 1 besitzt eine mit dem Gewindesackloch 77 fluchtende Durchgangsbohrung 12, die nahe der Unterfläche 3 gegenüber dem Gewindesackloch 77 und der Durchbohrung 75 zur Aufnahme einer den Schaft 11 des Bolzens 10 umgebenden Hülse 14 radial erweitert ist. Die Hülse 14 stützt sich auf der Oberseite der Federstahlplatte 62 ab und ist auf dieser mittels einer die Hülse 14 übergreifenden und den Kopf des Bolzens 10 aufnehmenden Kappe 19 dauerhaft verankert. Die Durchbohrung 12 ist von der Oberseite 13 des Oberteils 1 aus zu einer zylindrischen Kammer 17 radial erweitert, welche drei gegeneinander verspannte Tellerfederpakete 52, 54, 56 aufnimmt. Die Kappe 19 überdeckt auch die Kammer 17 und die darin enthaltenen Tellerfederpakete. Die Tellerfederpakete 52, 54, 56 greifen mit ihren Außenperipherien in die zylindrische Seitenwand der Kammer 17 ein und stützen sich mit ihrer Innenperipherie an der Hülse 14 ab.

Wie aus Vorstehendem und den Figuren 2 und 3 ersichtlich, bleibt das Oberteil 1 auch bei fest angezogenem Bolzen 10 gegen die Wirkung der Feder 50 (bestehend aus den drei Tellerfederpaketen 52, 54, 56) an dieser Stelle in geringem Umfang relativ zum Unterteil 2 beweglich.

Ein dem Bolzen 10 entsprechender Bolzen 70 erstreckt sich durch das Oberteil 1 und den zweiten Abschnitt 67 der Federstahlplatte 62 in ein Gewindesackloch 47 des Unterteils 2. Der Schaft 41 des Bolzens 70 ist von einer Hülse 45 umgeben, welche durch eine mit dem Gewindesackloch 47 fluchtende Bohrung 73 des Oberteils 1 sowie durch eine Öffnung 43 in der Federstahlplatte 62 reicht und auf der Oberfläche 5 des Unterteils 2 aufsitzt. Eine Kappe 49, die den Kopf des Bolzens 70 aufnimmt, übergreift das äußere Ende der Hülse 45 sowie eine zur Oberseite 13 offene Kammer 48 (als radiale Erweiterung der Bohrung 73) im Oberteil 1, in welcher als Feder 40 drei gegeneinander verspannte Tellerfederpakete 42, 44, 46 angeordnet sind. Die Tellerfederpakete 42, 44, 46 greifen außen in die zylindrische Kammerwand 48 ein und stützen sich innen an der Außenfläche der Hülse 45 ab. Damit ist das Oberteil 1 auch bei fest angezogenem Bolzen 70 in dessen Bereich geringfügig gegen die Wirkung der Feder 40 beweglich, und zwar zusammen mit dem Abschnitt 67 der Federstahlplatte.

Etwa in der Mitte des ersten Abschnittes 66 besitzt das Oberteil 1 eine zu seiner Unterfläche 3 senkrechte Durchgangsbohrung 21 (Fig. 3), die mit einer Durchgangsbohrung 22 im Unterteil 2 fluchtet. In die Bohrung 22 ist von unten ein Gewindeeinsatz 23 im Preßsitz eingefügt, in welchen der Schaft 24 einer Stellschraube 20 mit seinem Außengewinde eingreift. Der Kopf 25 der Stellschraube 20 ist in einer zur Oberseite 13 offenen Erweiterung der Bohrung 21 wenigstens teilweise beherbergt und von einem Hartmetallring 26 unterfaßt.

Etwa in der Mitte des Abschnittes 68 ist eine weitere Stellschraube 30 vorgesehen, deren Schaft 34 sich durch eine zur Unterfläche 3 senkrechte Durchgangsbohrung 31 im Oberteil 1 und eine damit fluchtende Durchgangsbohrung 32 im Unterteil 2 erstreckt und in einen in die Durchgangsbohrung 32 von unten eingepaßten Gewindeeinsatz 33 eingreift. Der Kopf 35 der Stellschraube 30 ist in einer zur Oberseite 13 offenen Erweiterung der Bohrung 31 wenigstens teilweise eingefangen und von einem Hartmetallring 36 unterfaßt.

Die Stellschraube 20 und der Bolzen 10 sind längs einer Mittellinie 64 der kreuzförmigen Federstahlplatte 62 beabstandet und auf dieser symmetrisch zu der querliegenden Mittellinie 69 der Federstahlplatte 62 angeordnet. Entsprechend sind die Stellschraube 30 und der Bolzen 70 längs der Mittellinie 69 beabstandet auf dieser und symmetrisch zur Mittellinie 64 angeordnet. Ferner sind die Schrauben 61 und 65 beiderseits der Mittellinie angeordnet und ihre Verbindungslinie liegt quer zu dieser. Entsprechendes gilt für das Schraubenpaar 71, 73. Die gleichen räumlichen Verhältnisse liegen für die Schraubenpaare 72, 74 und 76, 78 bezüglich der Mittellinie 69 vor.

Im Oberteil 1 ist durch die Feder 50 eine Vorspannung relativ zum Unterteil 2 erteilt, die das Oberteil 1 über den Hartmetallring 26 gegen den Kopf der Stellschraube 20 andrückt. Entsprechend ist dem Oberteil 1 durch die Feder 40 eine Vorspannung aufgeprägt, die das Oberteil 1 über den Hartmetallring 36 gegen den Kopf der Stellschraube 30 drückt. Durch Einwärts- oder Auswärtsdrehen der Stellschraube 20 und/oder der Stellschraube 30 um wenige Umdrehungen oder nur einen Bruchteil einer Umdrehung kann daher die Lage des Oberteils 1 relativ zu dem Unterteil 2 bezüglich Maschinenachsen exakt eingerichtet werden, die parallel zu den Mittellinien 64 und 69 liegen, und zwar mit einer Genauigkeit im Bereich von einem u.

Zur Befestigung eines Werkstücks oder Werkzeugs besitzt das Oberteil 1 einen über die Seitenfläche 16 hinausweisenden Ansatz 90, der mit mehreren Durchbohrungen, von denen einige mit 92, 94, 96, 98 bezeichnet sind, zur Befestigung des Werkstückes am Oberteil 1 versehen ist.

## Patentansprüche

1. Vorrichtung zum Einrichten eines Oberteils (1), welches zur Befestigung eines Werkstücks oder Werkzeugs vorgesehen ist, bezüglich eines mit dem Oberteil (1) verbundenen Unterteils (2) mit wenigstens einer Stellschraube (20, 30) deren Schaft (24, 34) sich durch das Oberteil (1) drehbar erstreckt und in ein im Unterteil (2) vorgesehenes Gewinde (23, 33) eingreift. Dadurch gekennzeichnet, daß das Oberteil (1) an dem Unterteil (2) unter vorgegebener Vorspannung relativ zum Unterteil (2) mit Abstand zur Stellschraube verankert ist, und daß ein Führungsteil (60) am Unterteil (2) und am Oberteil (1) befestigt ist, welches dem Oberteil (1) bei Verstellen der Stellschrauben (20) eine Kippbewegung um eine zur Stellschraube (20) senkrechte Achse aufzwingt.

2. Vorrichtung nach Anspruch 1, dadurch gekennzeichnet, daß das Oberteil (1) auf dem Unterteil (2) mittels eines Bolzens (10, 70) dauerhaft verankert ist, an welchem wenigstens eine Feder (50, 40) zur Erzeugung der Vorspannung angeordnet ist, die zwischen Unterteil (2) und Oberteil (1) eingespannt ist.

3. Vorrichtung nach Anspruch 2, dadurch gekennzeichnet, daß das Führungsteil (60) dem Oberteil (1) bei Verstellen der Stellschraube (20) eine Bewegung um eine zur Verbindungslinie (64) von Stellschraube (20) und Bolzen (10) senkrechte Achse aufzwingt.

4. Vorrichtung nach einem der vorstehenden Ansprüche, dadurch gekennzeichnet, daß als Führungsteil zwischen Oberteil (1) und Unterteil (2) eine Federstahlplatte (62) zwischengelegt ist, welche an wenigstens einem ersten Abschnitt (65, 66) am Unterteil (2) und an wenigstens einem zweiten Abschnitt (67, 68) am Oberteil (1) befestigt ist.

5. Vorrichtung nach Anspruch 4, dadurch gekennzeichnet, daß die Federstahlplatte (62) im wesentlichen Kreuzform besitzt, an deren gegenüberliegenden Enden zwei ersten Abschnitte (65, 66) bzw. zwei zweite Abschnitte (67, 68) ausgebildet sind.

6. Vorrichtung nach einem der vorstehenden Ansprüchen, dadurch gekennzeichnet, daß das Oberteil (1) eine ebene Unterfläche (3) und das Unterteil (2) eine ebene Oberfläche (5) aufweisen, wobei die Unterfläche und die Oberfläche einander benachbart sind und sich im wesentlichen parallel zueinander erstrecken.

7. Vorrichtung nach Anspruch 6, dadurch gekennzeichnet, daß die Stellschraube (20) sich im wesentlichen senkrecht zu der Unterfläche (3) erstreckt.

8. Vorrichtung nach Anspruch 6 oder 7, dadurch gekennzeichnet, daß der Bolzen (10) in der Nähe eines ersten Abschnittes (65) der Federstahlplatte (62) und die Stellschraube (20) in der Nähe eines weiteren, beabstandeten ersten Abschnittes (66) angeordnet sind.

9. Vorrichtung nach einem der vorstehenden Ansprüche, dadurch gekennzeichnet, daß die Feder (50) aus wenigstens einem Tellerfederpaket (52) besteht, welches den Bolzen (10) umgibt, sich an seiner Außenperipherie am Oberteil (1) verkrallt und an seiner Innenperipherie am Unterteil (2) verankert ist.

10. Vorrichtung nach Anspruch 9, dadurch gekennzeichnet, daß der Bolzen (10) von einer auf dem Unterteil (2) festgelegten Hülse (14) umgeben ist, an welcher die Innenperipherie des Federpakets (52) verankert ist.

11. Vorrichtung nach einem der Ansprüche 4 - 10, dadurch gekennzeichnet, daß die Feder (50) aus mehreren, gegeneinander verspannten Federpaketen (52, 54, 56) besteht.

12. Vorrichtung nach einem der Ansprüche 10 oder 11, dadurch gekennzeichnet, daß das oder die Federpakete in einer Ausnehmung (17) im Oberteil (1) beherbergt sind.

13. Vorrichtung nach Anspruch 12, dadurch gekennzeichnet, daß die Ausnehmung (17) von einer mit dem Bolzen (10) verbundenen Kappe (19) abgedeckt ist.

14. Vorrichtung nach einem der vorstehenden Ansprüche, dadurch gekennzeichnet, daß zur Einrichtung des Oberteils (1) relativ zu zwei in einer Ebene liegenden senkrechten Achsen zwei Paare umfassend je eine Stellschraube (20, 30) und je einen Bolzen (10, 70) vorgesehen sind, wobei jeweils ein Paar aus Stellschraube (20; 30) und Bolzen (10; 70) symmetrisch zu einer Mittellinie (69) der Federstahlplatte (62) auf der anderen Mittellinie (64) angeordnet ist.

15. Vorrichtung nach einem der vorstehenden Ansprüche, dadurch gekennzeichnet, daß das Oberteil (1) einen über das Unterteil (2) nach einer Seite vorstehenden Ansatz (90) aufweist, der Bohrungen (92, 94) oder dergleichen Mittel zur Befestigung eines Werkstücks oder Werkzeugs besitzt.

16. Vorrichtung nach Anspruch 15, dadurch gekennzeichnet, daß einer der Bolzen (10) dem Ansatz (90) benachbart ist.

17. Vorrichtung nach einem der vorstehenden Ansprüche, dadurch gekennzeichnet, daß das Unterteil (2) an seiner Unterseite (6) mit einer insbesondere schwalbenschwanzartigen Präzisionsführung (8) versehen ist.

18. Vorrichtung nach Anspruch 17, dadurch gekennzeichnet, daß die Präzisionsführung (8) eine Klemmvorrichtung (7, 15) aufweist.

## Claims

1. A device for adjusting an upper part (1) which is provided for affixing a workpiece or a tool relative to a lower part (2) which is connected to the upper part (1) by means of at least one setting screw (20, 30) the shank (24, 34) of which passes rotatably through the upper part (1) and engages a screw thread (23, 33) provided for in the lower part (2), characterized in that the upper part (1) is anchored in the lower part (2) under predefined pre-stressing relative to the lower part (2) spaced apart from the setting screw, and in that a guiding means (60) is fitted to the lower part (2) and to the upper part (1), which guiding means, when adjusting the setting screws (20), forces the upper part (1) to make a tilting motion about an axis, which is perpendicular to the setting screw (20),

2. A device according to claim 1 characterized in that the upper part (1) is permanently anchored on the lower part (2) by means of a bolt (10, 70) on which at least one spring (50, 40) is arranged for providing pre-stressing, said spring being clamped between lower part (2) and upper part (1).

3. A device according to claim 2 characterized in that, when adjusting the setting screw (20), the guiding means (60) constrains the upper part (1) to move about an axis which is perpendicular to the line (64) extending between setting screw (20) and bolt (10).

4. A device according to the preceding claims, characterized in that a spring steel plate (62) is disposed between the upper part (1) and the lower part (2) as a guiding means, said plate being affixed to the lower part (2) on at least one first segment (65, 66) and to the upper part (1) on at least one second segment (67, 68).

5. A device according to claim 4, characterized in that the spring steel plate (62) is substantially cross-shaped, showing at its mutually opposite ends two first segments (65, 66) and respectively two second segments (67, 78).

6. A device according to one of the preceding claims, characterized in that the upper part (1) comprises a planar lower surface (3) and the lower part (2) comprises a planar upper surface, the lower surface (5) and the upper surface being in the vicinity of each other and extending substantially parallel to each other.

7. A device according to claim 6, characterized in that the setting screw (20) extends substantially perpendicular to the lower surface (3).

8. A device according to claim 6 and 7, characterized in that the bolt (10) is arranged in the vicinity of a first segment (65) of the spring steel plate (62), and the setting screw (20) is arranged in the vicinity of a further segment (66) which is spaced apart from the first segment.

9. A device according to one of the preceding claims, characterized in that the spring (50) consists of at least one stack of Belleville springs (52) which surrounds the bolt (10), clutches with its outer periphery at the upper part (1) and is anchored with its inner periphery in the lower part (2).

10. A device according to claim 9, characterized in that the bolt (10) is surrounded by a bush (14) fitted in the lower part (2) to which the inner periphery of the stack of springs (52) is anchored.

11. A device according to one of claims 4 to 10, characterized in that the spring (50) consists in several stacks of springs (52, 54, 56) clamped against each other.

12. A device according to one of claims 10 or 11, characterized in that the stack or stacks of springs are located in a recess (17) in the upper part (1).

13. A device according to claim 12, characterized in that the recess (17) is covered by a cap (19) connected with the bolt (10).

14. A device according to one of the preceding claims, characterized in that for adjusting the upper part (1) relative to two perpendicular axes lying in a plane, two pairs comprising each one setting screw (20, 30) and a bolt (10, 70) are provided for, one pair consisting respectively of setting screw (20; 30) and bolt (10; 70) being arranged symmetrically to a centre line (69) of the spring steel plate (62) on the other centre line (64).

15. A device according to one of the preceding claims, characterized in that the upper part (1) comprises a fitting (90) jutting over the lower part (2) on one side, which fitting shows boreholes (92, 94) or similar means for affixing a working piece or a tool.

16. A device according to claim 15, characterized in that one of the bolts (10) is in the vicinity of the fitting (90).

17. A device according to one of the preceding claims, characterized in that the lower part (2) is provided with a in particular dovetailed precision guide (8) on its underside (6).

18. A device according to claim 17, characterized in that the precision guide (8) shows a clamping device (7, 15).

## Revendications

1. Dispositif pour le réglage d'une partie supérieure (1) prévue pour fixer une pièce à usiner ou un outil, par rapport à un partie inférieure (2) reliée à la partie supérieure (1) par au moins une vis de serrage (20, 30) dont la tige (24, 34) s'étend dans la première partie (1) de façon rotative et s'engrène dans un filet de vis (23, 33) prévu dans la partie inférieure (2), caractérisé en ce que la partie supérieure (1) est ancrée dans la partie inférieure (2) après préserrage prédéterminé par rapport à la partie inférieure (2) à distance de la vis de serrage et en ce qu'un élément de guidage (60) est fixé à la partie inférieure (2) et à la partie supérieure (1), lequel élément force la partie supérieure (1) à faire un mouvement de bascule autour d'un axe perpendiculaire à la vis de serrage (20) lors du réglage de la vis de serrage (20).

2. Dispositif selon la revendication 1, caractérisé en ce que la partie supérieure (1) est ancrée de façon durable sur la partie inférieure (2) à l'aide d'un boulon (10, 70), sur lequel est placé au moins un ressort (50, 40) pour produire le préserrage, enserré entre la partie inférieure (2) et la partie supérieure (1).

3. Dispositif selon la revendication 2, caractérisé en ce que, lors du réglage de la vis de serrage (20), l'élément de guidage (60) force la partie supérieure (1) à faire un mouvement autour d'un axe perpendiculaire à la ligne (64) reliant la vis de serrage (20) et le boulon (10).

4. Dispositif selon l'une des revendications précédentes, caractérisé en ce qu'une plaque en acier à ressorts (62) est placée entre la partie supérieure (1) et la partie inférieure (2) en tant qu'élément de guidage, laquelle plaque est fixée sur au moins un premier segment (65, 66) à la partie inférieure (2) et sur au moins un deuxième segment (67, 68) à la partie supérieure (1).

5. Dispositif selon la revendication 4, caractérisé en ce que la plaque en acier à ressorts (62) présente essentiellement une forme en croix aux extrémités opposées de laquelle sont formés deux premiers segments (65, 66) et respectivement deux deuxièmes segments (67, 68).

6. Dispositif selon l'une des revendications précédentes, caractérisé en ce que la partie supérieure (1) présente une surface inférieure plane (3) et la partie inférieure (2) présente une surface supérieure plane (5), la surface inférieure et la surface supérieure étant avoisinantes et s'étendant essentiellement de façon parallèle l'une par rapport à l'autre.

7. Dispositif selon la revendication 6, caractérisé en ce que la vis de serrage (20) s'étend en substance perpendiculairement à la surface inférieure (3).

8. Dispositif selon la revendication 6 ou 7, caractérisé en ce que le boulon (10) se trouve à proximité d'un premier segment (65) de la plaque en acier à ressorts (62) et la vis de serrage (20) à proximité d'un autre premier segment (66) espacé.

9. Dispositif selon l'une des revendications précédentes, caractérisé en ce le ressort (50) consiste en au moins un groupe de ressorts Belleville (52) qui entoure le boulon (10), s'accroche sur sa périphérie externe à la partie supérieure (1) et est ancré à la partie inférieure (2) sur sa périphérie interne.

10. Dispositif selon la revendication 9, caractérisé en ce que le boulon (10) est entouré d'une douille (14) fixée sur la partie inférieure (2), à laquelle la périphérie interne du groupe de ressorts (52) est ancrée.

11. Dispositif selon l'une des revendication 4 à 10, caractérisé en ce que le ressort (50) est composé de plusieurs groupes de ressorts (52, 54, 56) enserrés de façon antagoniste les uns par rapport aux autres.

12. Dispositif selon l'une des revendications 10 ou 11, caractérisé en ce que le ou les groupes de ressorts sont logés dans un renfoncement (17) dans la partie supérieure (1).

13. Dispositif selon la revendication 12, caractérisé en ce que le renfoncement (17) est recouvert d'un capuchon (19) relié au boulon (10).

14. Dispositif selon l'une des revendications précédentes, caractérisé en ce que pour le réglage de la partie supérieure (1) par rapport à deux axes perpendiculaires placés dans un plan, deux paires comprenant chacune une vis de serrage (20, 30) et un boulon (10, 70) sont prévues, une paire avec vis de serrage (20 ; 30) et boulon (10 ; 70) étant respectivement disposée de façon symétrique par rapport à une ligne centrale (69) de la plaque en acier à ressorts (62) sur une autre ligne centrale (64).

15. Dispositif selon l'une des revendications précédentes, caractérisé en ce que la partie supérieure (1) présente une rallonge (90) faisant saillie au dessus de la partie inférieure (2) sur un côté, ladite rallonge présente des perforations (92, 94) ou autres moyens semblables pour fixer une pièce à usiner ou un outil.

16. Dispositif selon la revendication 15, caractérisé en ce que l'un des boulons (10) est au voisinage de la rallonge (90).

17. Dispositif selon l'une des revendications précédentes, caractérisé en ce que la partie inférieure (2) est munie sur son côté inférieur (6) d'un guidage de précision (8) en particulier en forme de queue d'aronde.

18. Dispositif selon la revendication 17, caractérisé en ce que le guidage de précision (8) présente un dispositif de serrage (7,15).
